# EUROPEAN PATENT APPLICATION

(11) **EP 4 628 253 A1**
(43) Date of publication of application: **08.10.2025**
(21) Application number: 25168165.6
(22) Date of filing: 03.04.2025
(51) Int. Cl.: B24B 7/06, B24B 7/07, B24B 9/04, B24B 27/00, B24B 41/00, B24B 55/06, B25J 11/00, B25J 15/00

(54) **MACHINE FOR MACHINING THE FRICTION SURFACE OF BRAKE PADS OF DISC BRAKES FOR MOTORISED VEHICLES**

(30) Priority: 03.04.2024 IT 202400007360
(71) Applicant: Aseo srl, 12084 Mondoví (CN) (IT)
(72) Inventor: ASCHERI, Marco, 12084 Mondovì (CN) (IT)
(74) Representative: Frare, Paolo

(57) **Abstract**

Machine (5) for machining the friction surface of brake pads (32) of disc brakes for motor vehicles, comprising a first conveyor belt (20), onto which brake pads to be sanded and ground are loaded, and a second conveyor belt (21), onto which machined brake pads are loaded, the machine (5) further comprising an anthropomorphic robotic arm (26) provided with a head (27) at its free end, in which a gripper (28) can be removably fixed to be able to grasp the brake pads (32), said robotic arm (26) being drivable in different operating positions, moving along predetermined paths, the machine further comprising at least one sanding and grinding wheel (38) having a vertical axis, for sanding and grinding the friction surface of a brake pad (32), said robotic arm (26) being arranged to carry a brake pad (32) on a transverse support plane (67), wherein said grinding wheel (38) performs the sanding and grinding of said brake pad (32) with a single stroke.

## Description

The invention relates to a machine for machining the friction surface of brake pads of disc brakes for motorised vehicles, which is adapted to grind the friction surfaces of each brake pad, as such surfaces wear out as a result of repeated braking, thus ensuring the braking of the disc brakes of each motorised vehicle for long periods of time. Machines for machining the friction surface of brake pads for disc brakes are known, for grinding the friction surfaces of the brake pads themselves under the conditions described above. Such machines basically consist of a horizontal workbench, supported below by a series of metal bars supported on the floor by a plurality of elastic feet distributed around the entire perimeter of each machine, and on the upper horizontal surface of the bench various mechanical components are mounted and supported, substantially comprising:
- at least one rotating tool (such as a grinding wheel, a sander of various kinds, etc.) with a vertical axis, fixedly hinged in the bench and protruding slightly upwards therefrom, in order to sand and grind the cutting surface of each brake pad, not only horizontally, but also in oblique directions and inclined in different manners;
- a first and a second conveyor belt arranged parallel and slightly spaced apart and oriented in the orthogonal direction of the workbench, each of which is advanced in a cadenced manner by an advancement mechanism thereof, and the advancement movement of one belt is opposite to that of the other, wherein the first belt serves to transport the various brake pads to be ground, which are progressively loaded onto the belt itself by picking them up from a specific loader mounted on the workbench and associated with such a belt and on which all the brake pads to be ground are progressively loaded manually or automatically, and are transported towards the rotating tool which automatically grinds all the cutting surface of each brake pad to be sanded and ground, and wherein the second belt serves to pick up and transport the various brake pads which have already been sanded and ground by the rotating tool towards a container for collecting all the brake pads thus machined;

- an anthropomorphic robotic arm provided with a head for picking up, retaining and releasing individual brake pads, which is shaped with a base opposite the head and fixed in the workbench, such an arm being mounted in an articulated manner in the workbench and being provided with motorised means to drive the arm itself along a predetermined path, passing by the two conveyor belts and by the rotating tool. The arm is driven from a position in which the head is brought close to each brake pad arranged on the first belt, then the head first picks up such a brake pad and then the robotic arm is moved up to above the rotating tool and lowered, so that the brake pad is brought with its cutting surface to be sanded and ground into contact with the rotating tool, whereby the rotating drive of the tool itself causes the sanding and grinding of the same surface. At the end of such an operation, a specific tool is used to check whether the sanding and grinding have been carried out correctly, and when such a check is positive, the robotic arm is moved with reverse movements up to above the second belt, and the brake pad thus sanded and ground is released from the head of the robotic arm, falling onto the second belt, which transports such a pad to the collection container. In this condition, the grinding of a subsequent brake pad can begin with the same method as described above. The object of the present invention proposes is to sand and grind the worn cutting surfaces of brake pads for disc brakes of motor vehicles og various kind, by using a sanding and grinding machine of the kind described above, particularly relized for improving the parallelism of the friction surfaces of brake pads. This machine, which will be described below, differs with respect to the current machines on the market for the following reasons:
- it has an innovative concept as regards grinding the plane of the friction surface, for the fact that the articulated base of the robotic arm is locked into position in the area where the rotating tool is mounted, and the tool is driven in rotation and moved alternately under each brake pad, in one and the other straight direction, until the brake pad is ground by the desired measurement;

- the pick-up jig, on which the various brake pads to be ground are loaded, can be replaced automatically;
- the brake pad pick-up and release gripper, associated with the head of the robotic arm, can be replaced automatically. The jig and the gripper are replaced outside the protective cabin of the operating component parts, while such component parts are working, all without the need to stop the machine and thus saving working time;
- the gripper has an automatic device for replacing the gripper without operator intervention.

The invention will be better understood by the following description, only for illustrative and non-limiting purposes, of a preferred embodiment of the machine in accordance with the present invention, with reference to the accompanying drawings, in which:
- Fig. 1 shows a front perspective view of the machine in accordance with the invention with all of its two component parts mounted, and the robotic arm is moved to the position in which the brake pad is in correspondence of the rotating tool and is raised and not yet in contact therewith, the machine being enclosed by the protective cabin against access to the component parts of the machine during machining;
- Fig. 2 shows a front perspective view of the machine of Fig. 1, without the protective cabin and its component parts are moved in the same operating positions;

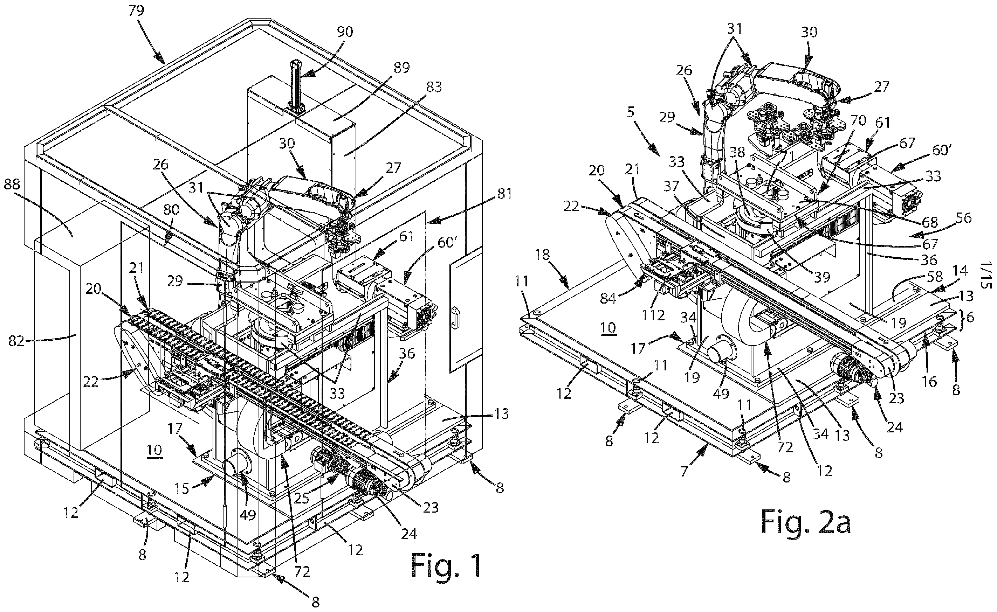

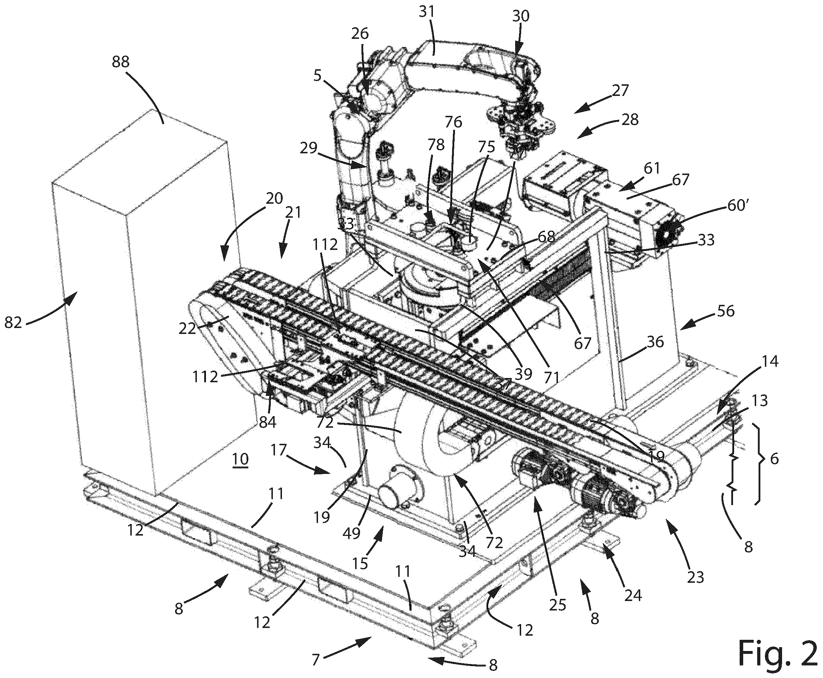

- Fig. 2 a shows a front perspective view of the machine of Fig. 2 in a subsequent operating position;

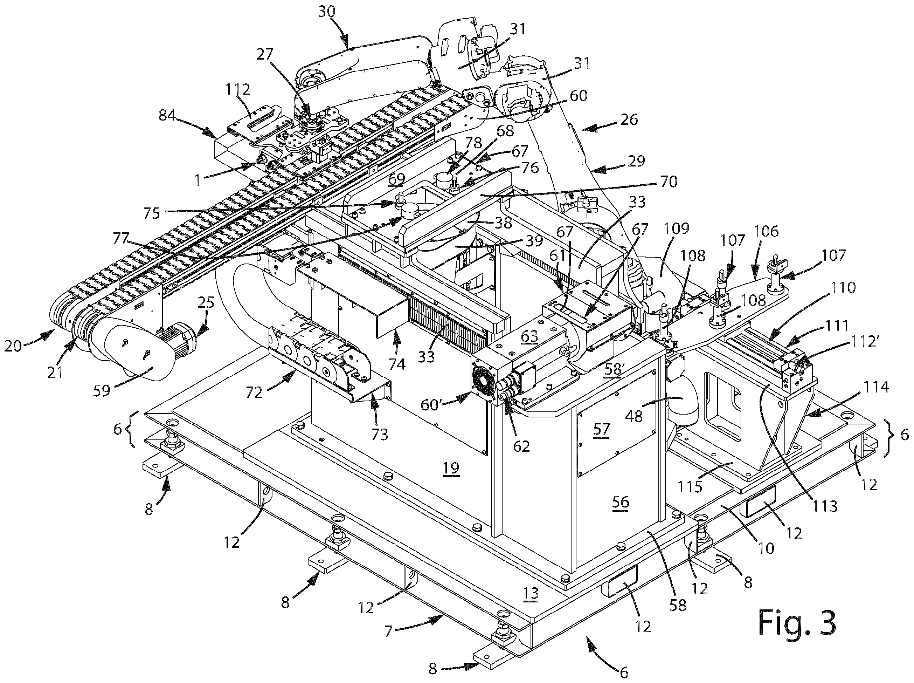

- Fig. 3 shows a rear perspective view of the machine of Fig. 1, without the protective cabin and with the robotic arm moved in correspondence of the first conveyor belt in which the brake pads to be sanded and ground are loaded, and the rotating tool is moved into the working position;

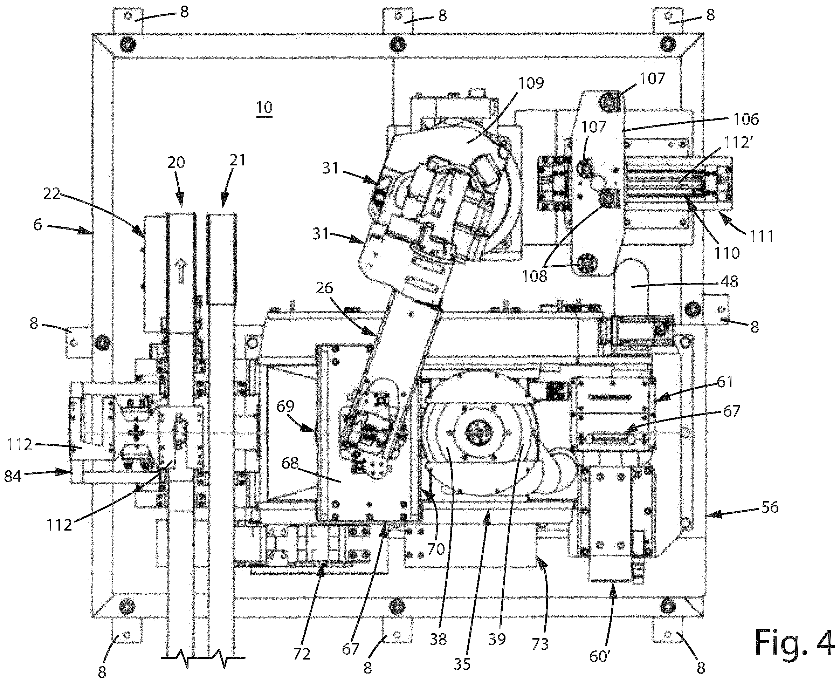

- Fig. 4 shows a plan view of the present machine, with the robotic arm with a brake pad attached for sanding and grinding, which is moved into a position which does not yet correspond with the rotating tool, and with the rotating tool moved into the operating position, which is dedicated to making radial and/or tangential bevels;

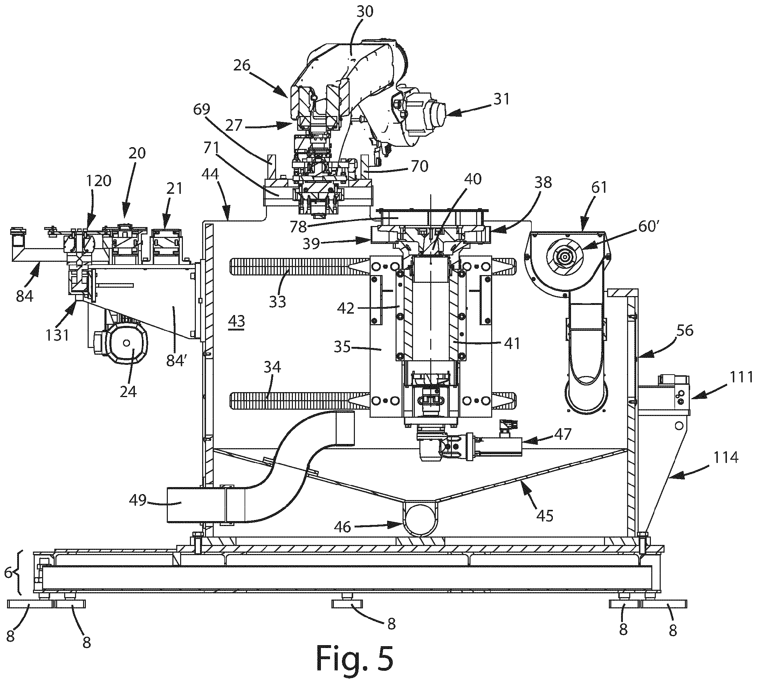

- Fig. 5 shows a front view of the machine of Fig. 4 sectioned along the line A-A;

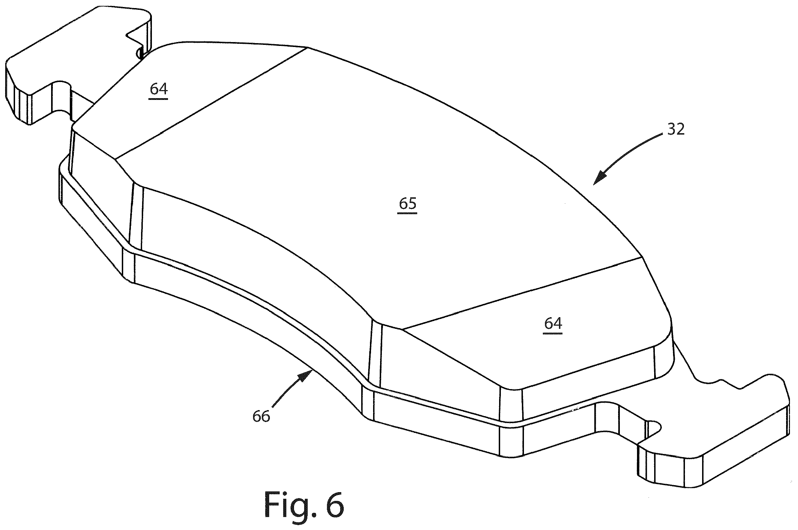

- Fig. 6 shows a front perspective view of the structural conformation of a common brake pad for disc brakes of motor vehicles;

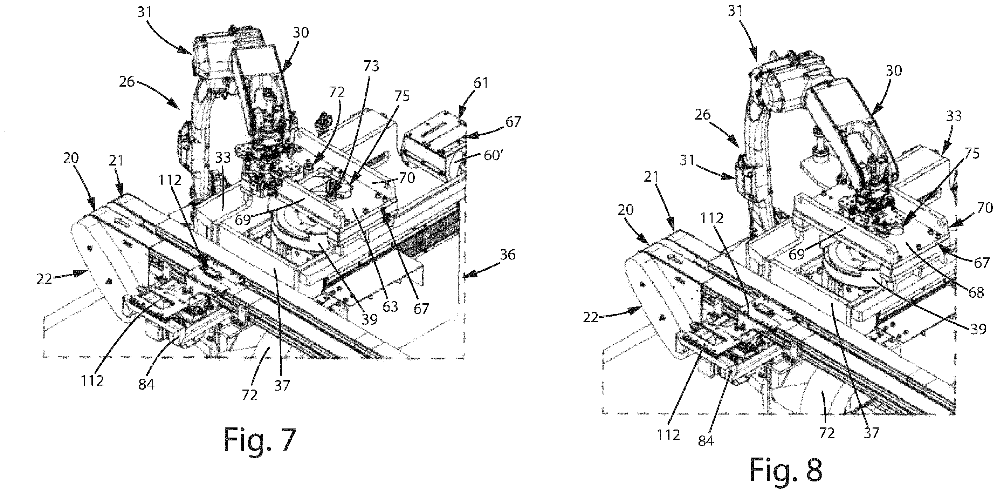

- Fig. 7 shows a frontal perspective view of the robotic arm with the brake pad pick-up assembly attached, moving towards the support wall, and the rotating tool moved into the working position;
- Fig. 8 shows a front perspective view of the robotic arm with the brake pad gripper assembly attached, moved onto the support wall and centred and locked in position, and the rotating tool moved into the working position;

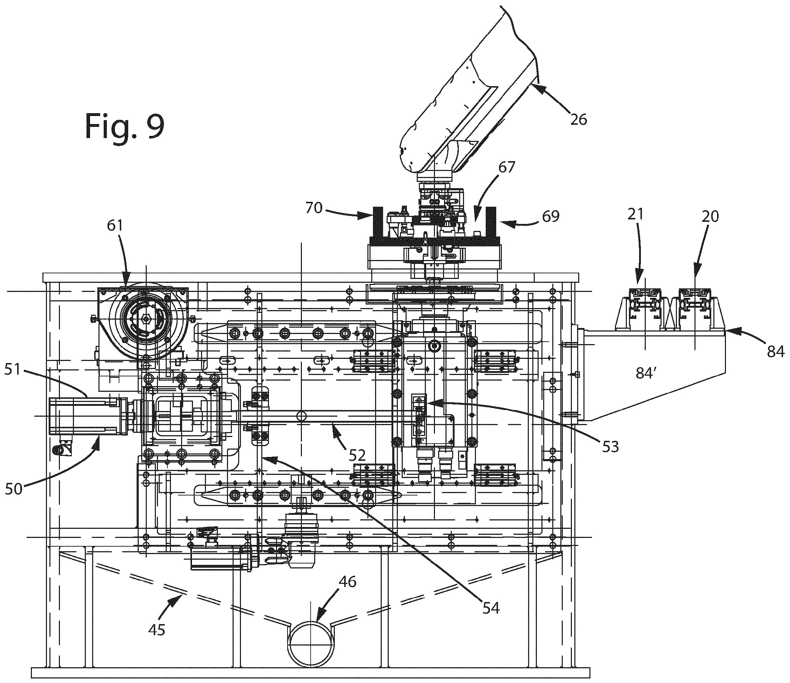

- Fig. 9 shows a front view of the machine sectioned with the robotic arm with the brake pad gripper assembly moved into the position of Fig. 8 and the rotating tool machining the brake pad in a single pass, and directed towards the relative end-stroke position;

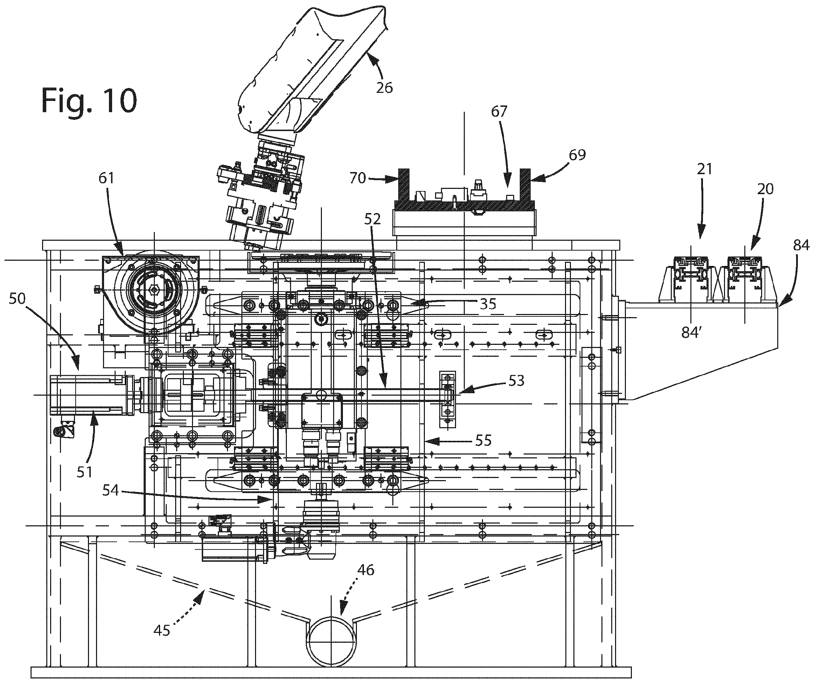

- Fig. 10 shows a front view of the sectioned machine with the carriage moved with a stroke to return to the starting position and the robotic arm moving to carry out, if envisaged, the bevels of the brake pads;

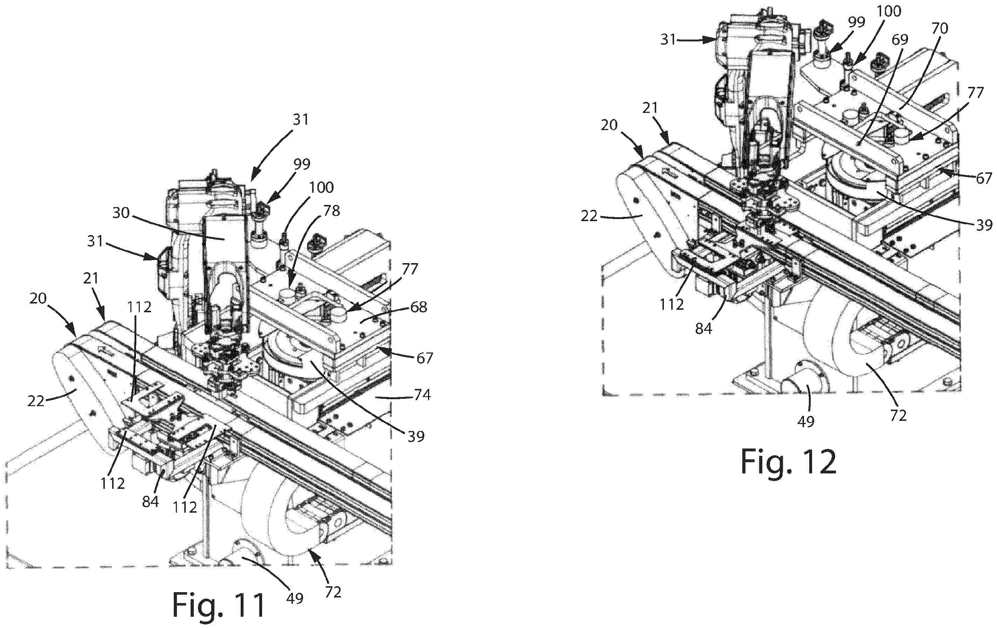

- Fig. 11 shows a front perspective view of the robotic arm moved above the conveyor belt to unload the machined brake pad;
- Fig. 12 shows a front perspective view of the robotic arm moved above the conveyor belt of the brake pad to be machined, in order to pick up the brake pad for further machining;

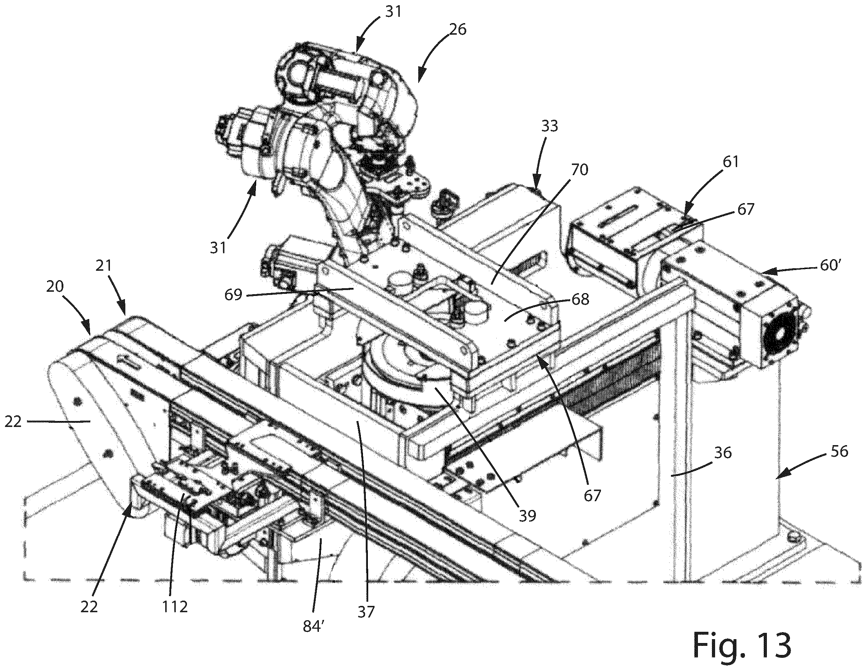

- Fig. 13 shows a front perspective view of the robotic arm with the brake pad-jig assembly being deposited on the support frame, where the brake pad must be machined, and picking up a possible brake pad-jig assembly with the brake pad to be machined;

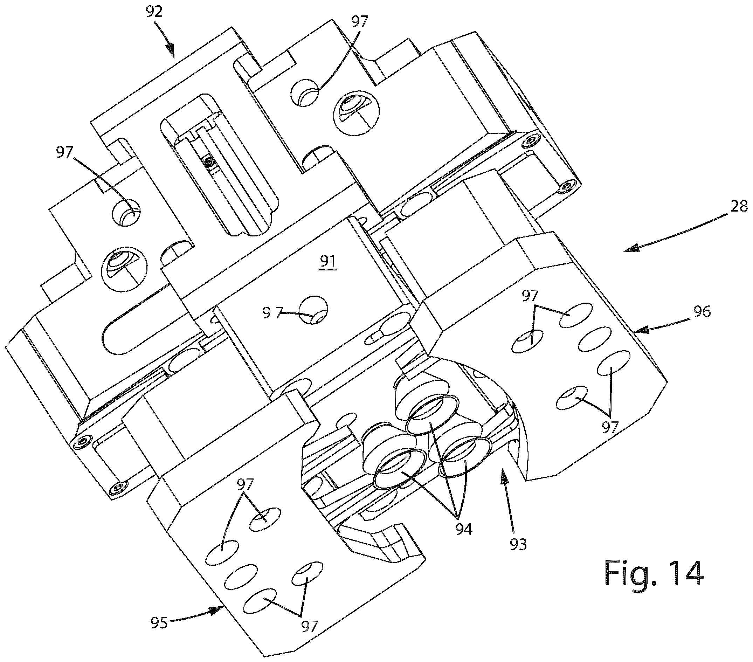

- Fig. 14 shows a front perspective view of a pneumatic gripper used in the present machine;

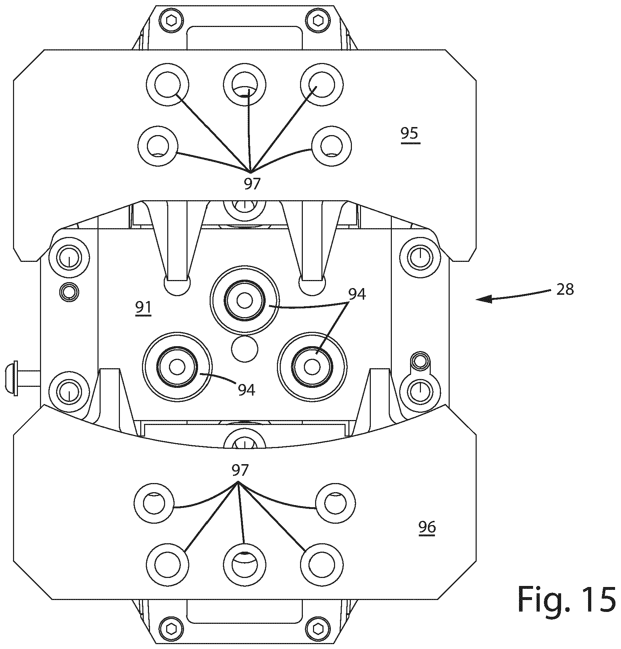

- Fig. 15 shows a front view of the pneumatic gripper of Fig. 14;

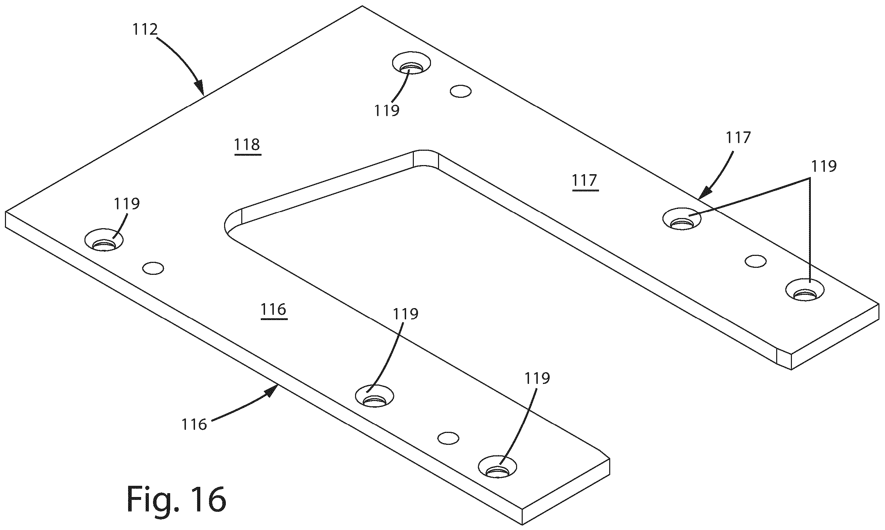

- Fig. 16 shows a front perspective view of a jig used in the present machine;

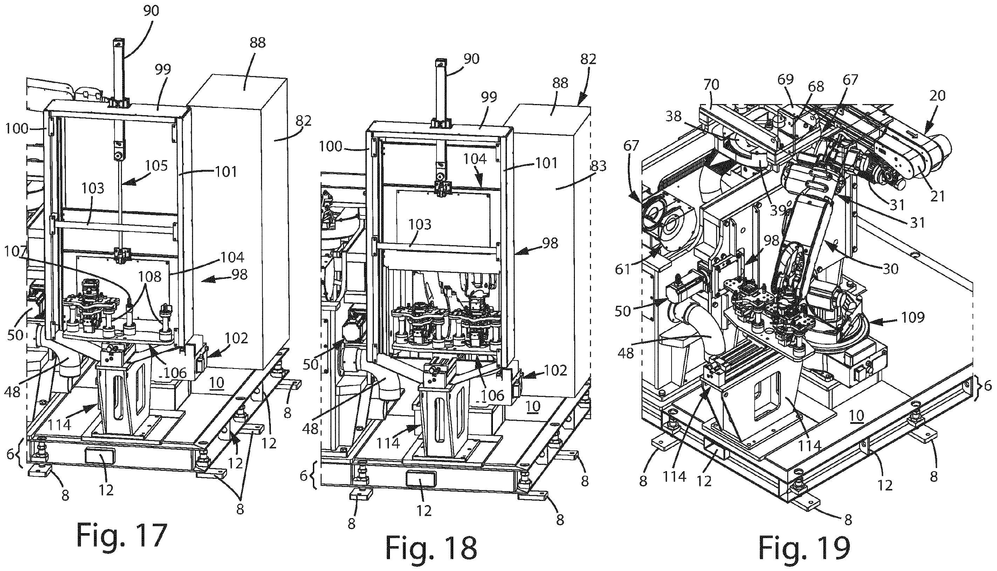

- Figs. 17 and 18 show a front view of a special bush mounted in the machine in a position outside the protective cabin and containing movable equipment included for changing the gripper into two positions, i.e., while one gripper holds a brake pad being machined in a fixed position (see Fig. 17), without the other position being occupied by an additionalbrake pad, another gripper is arranged, with the brake pad attached thereto which must be machined, in the other fixed position (see Fig. 18), so that as soon as the first brake pad is removed from the equipment, the additional brake pad can be picked up from the equipment and machined;
- Fig. 19 shows a front perspective view of the equipment during the removal of the gripper by the robotic arm and the brake pad attached thereto and already machined, and of the arrangement in the working position of the gripper and an additionalbrake pad to be machined attached thereto.

The present invention relates to a machine 5 for machining the friction surface of brake pads of disc brakes for motorised vehicles, which is adapted to sand and grind and the friction surfaces of each pad as such surfaces wear out as a result of repeated braking, in order to ensure the braking of disc brakes of each motorised vehicle for long periods of time. As can be seen particularly from Figs. 2 and 2a, the machine substantially consists up of a lower horizontal metal base 6 of rectangular or quadrangular shape, and removably fixed to the floor and supporting a plurality of mechanical metal members which are components of the machine, which will be described below. The lower base 6 comprises a horizontal bottom plate 7 fixed on the floor along the entire perimeter of the plate itself by means of a series of short and narrow metal brackets 8, by means of corresponding vertical and metal fixing bolts 9, and further comprises an upper metal plate 10 having the same dimensions as the lower plate 7 and superimposable on the latter, as well as shaped with a plurality of vertical peripheral through-holes 11 in correspondence of the vertical fixing bolts 9, to allow the passage of the adjustment bolts through all the through-holes 11, thereby achieving the adjustment (levelling) of the base 6 against the floor below (not shown) along the entire perimeter of the horizontal base 6. An additional flat metal plate 13 of rectangular shape is ixed to the upper surface of the upper plate 10, and the length and width of which are smaller than those of the upper plate, and the length of which extends from the rear edge 14 of the base 6 up to a front edge 15 which is spaced by a certain extent from the front edge (not shown) of the horizontal base 6.

In turn, the front edge 16 of the additional flat plate 13 is fixed flush with the corresponding front edge (not shown) of the upper plate 10, while the rear edge 17 of such a additional flat plate 13 is spaced by a certain amount from the corresponding rear edge 18 of the upper plate 10. A vertical metal support structure 19 is fixed below the upper surface of the additional flat plate 13 andsupports the metal component parts of the machine, which will be described below, while on the lateral part of the vertical support structure 19 there are arranged and fixed to the support structure itself both a first conveyor belt 20 of a given length, on which the brake pads to be sanded and ground (not shown) are selectively loaded, as will be described, and a second conveyor belt 21, which is identical and parallel to and slightly spaced apart from the first conveyor belt 20 and on which are loaded the machined brake pads which are then picked up, as will be described, and made available for their use, said first and second conveyor belts 20 and 21 being oriented in the transverse direction of the support structure 19 of the machine, and being supported at their ends by relative support casings 22 and 23, which are in turn fixed to and supported by the support structure 19. The conveyor belts 20 and 21 are sliding in opposite directions from each other on relative toothed wheels (not shown) hinged to the corresponding ends of the belts themselves, of which the toothed wheels of the first belt 20 can be driven in a given rotation and sliding direction by a relative electric motor 24 supported by the casings of the belt itself, and the toothed wheels of the second belt 21 can be driven in the opposite rotation and sliding direction by a relative electric motor 25 supported by the support structure 19 and drivable in rotation independently of the electric motor 22. The machine further comprises an anthropomorphic robotic arm 26 provided with a head 27 at its free end, supporting means for picking up, retaining and releasing individual brake pads to be machined and machined brake pads, such means being preferably made as a shaped gripper 28 as will be described, which is of an interchangeable type and can be replaced when its replacement is required and/or when it must be exchanged with another gripper in order to be able to grasp brake pads of different sizes. The robotic arm 26 is formed by an elongated vertical portion 29 constrained with its lower end externally against the rear wall (not shown) of the support structure 19, at about half the length of the structure itself, and the arm 26 is further provided with a curved portion 30 provided with the head 27 and articulated with its end opposite the head with the vertical portion 29 through two electric motors 31, adapted to drive the robotic arm 26 in different operating positions thereof, including moving the same along predetermined paths, arranged to allow picking up of each brake pad to be machined loaded on the jig and its loading first on the first conveyor belt 20, then its movement into the working position, where the brake pad is sanded and ground as will be described, and subsequently the movement of the machined brake pad into the position in which it is loaded, on the second conveyor belt 21, which is then driven to transport each machined brake pad to a collection area of the machine, where it is available to carry out additional braking functions. In the present case, the robotic arm 26 is that patented with European patents EP 3459697 B1, EP 2105265 A1, EP 3546137 B1 by Yaskawa K.K.

Fig. 6, which will be described below, shows a front perspective view of the structural conformation of a common brake pad 32.

Examining Figures 2 and 2a, it can be noted that on the upper, front and rear sides of the machine, two straight horizontal metal bars 33 are applied parallel and spaced apart from each other in the direction of the width of such a support structure, while on the lower, front and rear sides of the support structure 19, two straight horizontal metal bars 34 are also applied parallel and spaced apart from each other in the direction of the width of said support structure, with both lower bars being spaced at the same height from the corresponding upper bars. Both upper bars 33 are stiffened in position with the relative lower bars 34 by means of corresponding straight vertical bars 36. The horizontal upper bars 33 are also stiffened in position by relative straight horizontal side bars 37 applied to the support structure 19 and arranged in the direction of its width, and the horizontal lower bars 34 are stiffened in position as will be described.

All the bars 33 and 34 define with their length the full sliding stroke of the support carriage 35 and thus of the sanding and grinding wheel 38. The maximum stroke of the support carriage 35 is limited by two relative mechanical stops (not shown) associated with corresponding electrical or electronic sensors (also not shown) connected in the machine's electrical circuit. Depending on the thickness of the material to be removed in a single pass from the braking surface of each brake pad to be machined, the positioning height of the grinding wheel 38 is adjusted as described. The grinding wheel 38 is driven in rotation by an electric motor 39, supported by the support structure 19 and arranged below the grinding wheel and connected in the electrical circuit of the machine and controlled by the master microprocessor (not indicated), which is set in advance to rotate the motor 39 and the grinding wheel 38 when the sanding and grinding operations of the braking surface of each brake pad are required, independently of the operation of the support carriage 35. The support carriage 35 consists of a vertical metal structure (not indicated ) of rectangular shape and of a given height, such as to remain enclosed by the entire vertical support structure 19 and to extend for a height comprised between the upper bars 33 and the lower bars 34. The grinding wheel 38 is fixed centrally on the upper tapered portion 40 of an elongated vertical central shaft 41, communicating with the electric motor 39 above. The vertical shaft 41 is sliding in an alternating vertical direction with an established stroke in a vertical opening 42 of the support carriage 35. Furthermore, the metal structure 19 delimits a large inner chamber 43, closed above by a shaped upper wall 44 and enclosing the entire support carriage 35 with its various component parts, and delimited below by a lower wall 45 inclined downwards, and connected with a lower central discharge duct 46 of the metal debris falling from the friction surface of the brake pad 32 during its sanding and grinding. For determining the raising or lowering of the shaft 41, an electric motor 47 is provided, connected in the electrical circuit of the machine and controlled by the electronic microprocessor thereof, which motor is joined with mechanical members (not shown) connected to the shaft itself.

Such mechanical members can consist for example of a toothed pinion-rack assembly, or similar mechanical members.

During the installation of the machine in the functional position thereof and before it is put into operation, the inner chamber 43 is put into communication with a pneumatic system (not shown) already assembled in the operating site of the machine itself through a series of air circulation ducts 48 (see Fig. 3) and the discharge duct 47 and an additionaldischarge duct 49, both communicating with a metal debris collection vessel (not shown). Thereby, when the pneumatic system is put into operation, the mechanical debris falling from the brake pad 32 during the sanding and grinding of its friction surface is first circulated throughout the inner chamber 43, and then discharged from the latter into the outer collection vessel through the discharge ducts 46 and 49. For determining the alternating horizontal sliding of the support carriage 35, together with the grinding wheel 38, an additional electric motor 50 is provided (see Fig. 9 and 10) connected to the electrical circuit of the machine and fixed with its metal housing 51 to the inner wall of the inner chamber 43 of the support structure 19. The rotation shaft of the motor consists of an elongated horizontal screw 52 housed with its outer end in a bearing 53 fixed inside the support structure 19 and screwable and unscrewable in two corresponding threads (not indicated) obtained in two relative vertical side rails 54 and 55 of the support carriage 35, so that rotating the motor 50 in one rotation direction or the other determines the advancement of the carriage 35 and the grinding wheel 38 in one or the other horizontal direction, up to the desired position from time to time. The electric motor 50 is protected by a rear metal box-like case 56 (see Fig. 3) and fixed against the corresponding side wall (not indicated) of the support structure 19 and provided with a movable door 57 which can be opened and closed to allow or deny access to the motor itself. Such a box-like case 56 is fixed below to the edges (not indicated) of a flat horizontal metal plate 58, which in turn is fixed to the upper wall (not indicated) of the additional flat plate 13. The box-like case 56 is closed above by a flat horizontal metal plate 58' shaped like the box-like case and fixed thereto. In Fig. 3 it can also be noted that the conveyor belt 21 is fixed in position on the support structure 19 with its ends by corresponding support casings 59 and 60, of which the relative electric motor 25 is fixed to the support casing 59. An electrospindle consisting of an electric motor 60' and a cutting tool 61 coaxial to the motor 60' and rotatable by the same is fixed to the flat upper plate 58'. The electric motor 60' is powered by electric cables (not shown) passing through two channels 62 arranged parallel to each other and applied against the metal case 63 of the motor itself, such electric cables being connected in the electric circuit of the machine and controlled by the master electronic microprocessor of the machine itself.

In turn, the cutting tool 61 is provided with a cutting disc (not indicated) actuated in rotation by the electric motor 60' and passing through an opening 67 of the tool itself, projecting outwards.

The purpose of the cutting disc is to grind, if required, the side portions or bevels of each brake pad 32 to be machined. To achieve this result, each brake pad 32 with the relative jig are grasped by the gripper of the robotic arm 26 and the latter is moved above the cutting disc and into an inclined position, where such a disc grinds the brake pad in its side portions or bevels.

Next, the robotic arm 26 is rotated into its initial position and moved over the grinding wheel 38, which then grinds the flat central portion 65 of the brake pad 32 to the required size as described above. Referring now to Fig. 6, in which the structural conformation of a common brake pad 32 is shown, in an overturned position, it can be seen that it consists of a flat and elongated upper horizontal portion 66 and of the lower friction surface formed by said horizontal central portion 65 and by the lateral and inclined portions or bevels 64 with respect to the central portion 65.

The brake pad 32 is grasped by the gripper of the robotic arm 26, which is first rotated about its axis into a given position, such that the brake pad 32 with its flat central portion 65 is arranged in correspondence of the grinding wheel 38, thus enabling the sanding and grinding of such a central portion up to the required size. Subsequently, at the end of these operations, the robotic arm 26 is first lifted slightly with the brake pad 32 and the jig, and then moved up to the belt 21, on which the machined brake pad is deposited and ready to be picked up and used.

A flat and transverse metal support 67 is fixed to the horizontal upper bars 33, for the full width between the bars themselves, and such a flat support is provided with a horizontal flat wall 68, two vertical, raised side rails 69 and 70, and a central, vertical through opening 71, located in correspondence of and above the grinding wheel 38. Such a fixed support is arranged in correspondence of the robotic arm 26 which, therefore, when it has grasped with its gripper 28 the relative brake pad 32 to be sanded and ground, rotating about its own axis, moves such a brake pad in correspondence of the vertical through opening 71 with the friction surface of the same brake pad, so that such a friction surface is sanded and ground during the rotation and advancement of the grinding wheel itself.

To electrically power the electric motor 60, and to house the relative electric cables, a movable track 72 is provided, the end portions 73 and 74 ow which are laterally fixed to the support carriage 35.

Referring now in particular to Figs. 2 and 2a, it can be noted that on the flat horizontal wall 68 of the flat support for the brake pad 32, locking elements for the brake pad itself are arranged, to allow the sanding and grinding thereof. These locking elements consist of two centring pins 75 and 76, previously spaced apart from each other in the transverse direction of the flat wall 68, of such a size to allow the brake pad to be machined to be centred, and by two locking magnets 77 and 78, also spaced apart in the transverse direction and arranged at the respective centring pins 75 and 76, and these locking magnets are automatically operated in the presence of the brake pad-jig assembly and pushed against the centred brake pad, so as to lock it in position, until the end of its machining.

With reference to Fig. 1, it can be noted that the whole present machine is enclosed in advance by a protective cabin 79 in transparent plastic material, so that all the operations carried out by the machine can be observed from the outside without risks to the operator. Such a cabin 79 is provided on its sides with two doors 80 and 81, which are opened to access the machine before machining begins, to introduce the brake pads to be machined and to remove them after they have been machined, which doors are closed and kept closed for the entire duration of the machining.

Referring again to Fig. 1, it can be noted that outside the cabin 79, at the right side wall of the cabin itself, a vertical and elongated metal box-like case 82 is arranged, containing the gripping devices (i.e., two grippers) for each of the brake pads 32) of a given size, and at the rear wall of the cabin 79 an additionalvertical and elongated metal box-like case 83 is arranged, containing the jigs to be used to support the brake pads. In the left side wall of the support structure 19, a metal and horizontal support plane 84 is fixed, in a position below the belts 20 and 21, and in correspondence of them, protruding externally from said wall, which plane is joined below to a shaped metal support 85, also fixed to the support structure 19, and a support jig of a relative brake pad to be machined is positioned on such a plane from time to time.

Each of the box-like cases 86 and 87 is open below and rests against the upper surface of the upper plate 10, and is closed by a relative flat upper wall 88 and 89, wherein an elongated vertical pneumatic cylinder 90 protrudes from the flat upper wall 89, which is connected in the pneumatic circuit of the machine and controlled by the electronic microprocessor (not indicated) thereof, which cylinder is inserted in a corresponding through-hole (not indicated) of the flat upper wall.

Now examining Figs. 14 and 15, the conformation of a gripper 28 is shown, which basically consists of a shaped metal block 91, inside which is housed a group 91 of pneumatic cylinders (not visible) which are connected with the head of the robotic arm 26, which in turn is removably joined with a pneumatic system having a given air pressure. The gripper 28 further consists of a suction unit 93, removably joined with the shaped support block 91 and formed by a series of pneumatic suction cups 94 and two lateral gripping hands 95 and 96, wherein the pneumatic suction cups 94 are connected on one side internally with the pneumatic cylinder group 92 and on the other side are open outwards, in order to be able to suction the brake pad-jig assembly and move it into the desired positions, moving the robotic arm 26, and to be able to deposit such an assembly in the desired positions when suction is terminated. In turn, the gripping hands 95 and 96 serve to manually grasp the suction unit 93, to apply it against the support block 91 or to remove it from the latter. In the first case, the application is carried out and facilitated thanks to a series of through holes 97, which are inserted on corresponding pins (not shown) fixed on the support part. The gripper 28 is made in different sizes, so that it can be adapted to brake pads 32 and jigs of different sizes.

In order to support the brake pad-jig assembly, a thin vertical metal frame 98 of rectangular shape is provided (see Figs. 17 and 18), formed by an upper horizontal profile 99, joined with its ends with the corresponding ends of a relative elongated vertical profile 100 and 101, the other ends of which are joined with the corresponding ends of a lower metal load-bearing structure 102 fixed with the underlying lower metal plate 10.

The vertical profiles 100 and 101 are stiffened in position by at least one additional central horizontal profile 103 and are spaced apart from each other to allow the alternating vertical sliding of a thin vertical sliding frame 104 having a limited height, which is joined at the top with a sliding rod 105 in the pneumatic cylinder 90. Between the lower ends of the vertical profiles 100 and 101, a flat horizontal plate 106 elongated in the transverse direction slides horizontally in alternating directions, to which a first pair of vertical rods 107, spaced apart from each other, and a second pair of vertical rods 108, spaced by the same distance, are fixed (see also Fig. 3), wherein between each pair of rods a gripper 28 supporting a brake pad 32 can be removably inserted, by means of the robotic arm 26, which is hinged in a rotating base 109 fixed to the upper plate 10.

The sliding frame 104 can be moved from a lower lowered position (see Fig. 17), to an upper raised position (see Fig. 18), and vice versa. In the lowered position, the movable plate 106 is moved, in the manner to be described, into a position inserted between the vertical profiles 100 and 101, in which the horizontal sliding of such a plate 106 is prevented, into the condition in which the rod 105 is extracted from the cylinder 90. Fig. 17 shows that in this case the brake pad must be machined. Conversely, in the upper raised position, such a movable plate 106 is extracted from the vertical profiles 100 and 101, thus allowing the flat plate 106 to slide horizontally, so that a machined brake pad-jig assembly is attached between the rods 108 of the plate.

In this condition, then, the robotic arm 26 is subsequently moved first onto the machined brake pad (see Fig. 19) and grasps the brake pad-jig assembly and then moves such a brake pad onto the conveyor belt 21 and the jig over the horizontal support surface 84. Then, the robotic arm 26 is moved, again automatically, onto the brake pad to be machined, supported by the corresponding jig, and moves this assembly towards the support carriage 35 to perform the brake pad machining.

As a consequence of this, on one hand the machined brake pad is moved from the belt 21 to the collection area of the different machined brake pads, and on the other hand the remaining brake pad is in turn machined, and the operating steps thus carried out are then repeated with the same sequence.

Returning now to the horizontal flat plate 106, see Fig. 3, it can be noted that it is sliding horizontally within horizontal guides 110 of an established length, of a support block 111, and that such a flat plate is joined to the end of a pneumatic cylinder 112' housed between the horizontal guides 110, which act as a slide, and is fixed below on an upper plane 113 of a horizontal support base 114, which in turn is fixed on a flat plate 115 applied to the metal plate 10.

Said flat plate 106 can be moved by the pneumatic cylinder 112' from an extracted end-stroke position, see Fig. 3, in which it is inserted between the vertical profiles 100 and 101, see Fig. 17, to an opposite end-stroke position in which it is not inserted between the vertical profiles 100 and 101, and therefore the robotic arm 26 can insert or extract the brake pad-jig assembly between one or the other pairs of rods 107 or 108. Referring now to Fig. 16, the jig 112 is shown, which is used to house a corresponding brake pad 32. This jig 112 essentially consists of a thin metal body formed by two lateral and straight flaps 116 and 117 arranged parallel and spaced apart from each other by a space sufficient to accommodate the brake pad 32, and by a crosspiece 118 joined in one piece to an end of the flaps.

Such a jig 112 is provided with a plurality of through holes 119 for the insertion of corresponding pins (not shown) fixed on the upper surface of a movable metal surface 120 which is placed on the upper surface of the support surface 84, so as to keep the jig adhered to the latter. The jig 112 is made in different sizes to adapt to different brake pad sizes. Now examining Fig. 5, the jig 112 is shown, which is manually positioned on the movable metal support 120, connected with underlying pneumatic actuators 121, which are connected in the pneumatic and electrical circuit of the machine and are provided to move the movable support 120 vertically and to rotate it by 180°.

In this case, the jig 112 is positioned on the movable support 120 in the position shown in Figure 3, then a brake pad 32 is manually arranged on the conveyor belt 20 and such a belt then advances in a cadenced manner towards the support plane 84 and, when it reaches in correspondence of the latter, its presence is detected and its stop is determined in the position in which the brake pad 32 is aligned with such a support plane. In this position (starting position), the pneumatic actuators 121 are automatically inserted, which lift the jig and rotate it by 180°, aligning it with the brake pad, which is then grasped with the gripper 28 by the robotic arm 26 and housed in the jig 112, and wherein said robotic arm moves such a brake pad-jig assembly into the different operating positions of the machine, and wherein the grinding wheel 28 is moved into its rest position.

Subsequently, the gripper with such an assembly is first moved into the position of Fig. 7 and then into the position of Figs. 8 and 9, wherein such an assembly is moved over the flat support 67 in correspondence of the grinding wheel 28. Then the grinding wheel is moved into the position of Figs. 4 and 5. Wherein the grinding wheel sands and grinds the friction surface of the brake pad 28 in a single pass, and thereafter such an assembly, with the sanded and ground brake pad, is first lifted from the support surface 67, in the position of Figs. 2, 2a and 10, and finally the grinding wheel 28 is returned into the position of Figures 11, 12, wherein the robotic arm 26 moves such an assembly successively onto the conveyor belt 21, to unload the machined brake pad onto such a belt, and then onto the conveyor belt 20, to repeat the cycle with the same operating steps. Finally, the robotic arm moves into the position of Fig. 13 for performing the change of the jig on the movable plate 106 in the same manner as described above. During the operating steps of the latter figures, the grinding wheel remains returned and stationary in the initial rest position.

## Claims

1. Machine (5) for machining the friction surface of brake pads (32) of disc brakes for motor vehicles, which is adapted to determine the sanding and grinding of the friction surfaces of each pad as such surfaces wear out as a result of repeated braking, in order to ensure the braking of the disc brakes of each motor vehicle for long periods of time, comprising a lower horizontal metal base (6) of various geometric shapes and removably arranged on the floor, which lower base (6) comprises a series of metal brackets (8) fixed below the base (6) and resting on the floor, and further comprises an upper metal plate (10) superimposed and fixed on the base (6), on the upper plate (10) being fixed an additional flat metal plate (13) having smaller dimensions than those of the upper plate (10), and on said additional flat plate (13) being fixed a vertical support plate (19), on the side of which are arranged and fixed both a first conveyor belt (20) of a given length, on which are selectively loaded the brake pads to be sanded and ground, and a second conveyor belt (21), parallel to and slightly spaced apart from the first conveyor belt (20) and on which are loaded the sanded and ground brake pads, which are then picked up and made available for use, said first and second conveyor belts (20 and 21) being oriented in the transverse direction of said support structure (19), and being supported at their ends by relative support casings (22 and 23), themselves fixed to and supported by said support structure (19), said conveyor belts (20 and 21) being slidable in opposite sliding directions from each other by means of relative mechanical members mounted on the conveyor belts themselves, of which the mechanical members of the first belt (20) can be driven in a certain rotation and sliding direction by a relative electric motor (24) supported by said support structure (19), and the mechanical members of the second belt (21) can be driven in the opposite rotation and sliding direction by a corresponding electric motor (25) supported by said support structure (19) and drivable in rotation independently of the electric motor (22), the machine further comprises at least one anthropomorphic robotic arm (26) provided with a head (27) at its free end, in which a gripper (28) for retaining and releasing the individual brake pads to be machined and the machined brake pads can be removably fixed, which gripper can be replaced when its replacement is required and/or when it must be exchanged for another gripper, also of different sizes, in order to be able to grasp the brake pads (32), said robotic arm (26) being constrained with its lower end externally against the rear wall of said support structure (19) and further being provided with electric motors (31) adapted to drive the same arm in different operating positions, moving along predetermined paths, the machine further comprising at least one sanding and grinding wheel (38) having a vertical axis, drivable in rotation by an electric motor (39) and provided for sanding and grinding the friction surface of the brake pad by the required measurement, **characterised in that** said robotic arm (26) is arranged to move first on the conveyor belt (20) for picking up each brake pad (32) to be machined which is deposited on said belt, together with a jig (112) loaded on a support surface (84) of the machine, and automatically moved onto said conveyor belt (20) by actuator means (121), said robotic arm (26) then being movable, with the brake pad-jig assembly, on a transverse support carriage (67), wherein said assembly is held stationary by both said robotic arm (26) and by retaining means (75-78), in the condition in which said grinding wheel (38) performs the sanding and grinding of said brake pad (32) with a single stroke of the grinding wheel itself, mounted on a support carriage (35) sliding in the longitudinal direction, and operable by motorised means (50) from a rest position towards a working position, and vice versa, said grinding wheel (38) further being operable in height by additional motorised means (47), supported by said support carriage (35), for adjusting, if required, the machining depth of the friction surface of said brake pad (32), and further **characterised in that** said robotic arm (26) being further movable first on said conveyor belt (21) for depositing the machined brake pad and finally on said conveyor belt (20), for loading an additionalbrake pad to be machined and an additional jig, the machine being further **characterised by** cutting means operable by motorised means, for grinding, if required, the lateral portions or bevels (64) of each brake pad (32), by moving said robotic arm (26) from said conveyor belt (20) up to said cutting means and finally from the latter up to above said grinding wheel (38), and **characterised by** said robotic arm (26) movable on said support means (106) of said brake pad (32) to be machined with said jig, and, if necessary, picking up said already machined brake pad (32), together with said jig, and for the subsequent unloading onto said conveyor belt (21).

2. Machine according to claim 1, **characterised in that** said support carriage (35) is formed by a vertical metal structure of rectangular shape and a given height, such as to remain enclosed by the entire vertical support structure (19) and to extend by a given height, said vertical support structure (19) enclosing an upper tapered portion (40) of a central elongated vertical shaft (41), to which said grinding wheel (38) is centrally fixed, which shaft (41) slides vertically in an alternating direction with an established stroke in a vertical opening (42) of the support carriage (35), said vertical structure (19) further delimiting an inner chamber (43), closed above by a shaped upper wall (44) and enclosing the entire support carriage (35), and delimiting below a wall (45) inclined downwards, and connected to a lower central discharge duct (46) and to an additionaldischarge duct (43) of the metal debris falling from the friction surface of the brake pad (32).

3. Machine according to claim 2, **characterised in that** said inner chamber (43) communicates with a suction system already installed in the operating seat of the machine itself, through a series of air circulation ducts (48) and said discharge ducts (47 and 49).

4. Machine according to the preceding claims, **characterised in that** the alternating horizontal sliding of said support carriage (35), together with said grinding wheel (38), is determined by an additionalelectric motor (50) fixed with its metal housing (51) to the inner wall of said inner chamber (43), and the rotation shaft of which consists of an elongated horizontal screw (52) housed with its outer end in a bearing (53) inside the support structure (19) and screwable and unscrewable in two corresponding threads obtained in two relative vertical side rails (54 and 55) of said support carriage (35), so that by rotating the motor (50) in one rotation direction or in the other, it determines the advancement of the carriage (35) and the grinding wheel (38) in one or the other horizontal direction, up to the desired position from time to time.

5. Machine according to the preceding claims, **characterised in that** said actuator means consist of pneumatic actuators (121), which are activated in the presence of a brake pad (32) on the conveyor belt (20) and act on a movable support (120) cooperating with said support surface (84), and supporting a relative jig (112), determining the lifting and rotation by 180° of the jig and the alignment of the latter with the brake pad (32) to be machined, with subsequent picking up thereof by said robotic arm (26).

6. Machine according to the preceding claims, **characterised in that** said retaining means consist of two fixed centring pins (75 and 76) fixed on the flat wall (68) of said transverse support plane (67) and spaced apart from each other, by a measurement such as to allow centring each brake pad (32) to be machined with respect to a through opening (71) of said support plane (67), communicating with the underlying grinding wheel (38), the retaining means further consisting of two locking magnets (77, 78) spaced apart from each other and arranged at said centring pins (75 and 76), which magnets being automatically operable in the presence of said brake pads and jig, so as to lock said brake pad (32) in position during machining.

7. Machine according to any one of the preceding claims, **characterised in that** an electrospindle consisting of an electric motor (60') and said cutting means formed by at least one cutting tool (61) coaxial to and drivable in rotation by the motor itself is fixed on a flat upper plate (58') of the machine, said cutting tool (61) being provided with at least one disc passing through an opening (67) of the tool itself, projecting outwards.

8. Machine according to the preceding claims, **characterised in that** said support means comprise a flat horizontal plate (106), elongated in the transverse direction, on which are fixed a first pair of vertical rods (107), spaced from each other, and a second pair of vertical rods (108), spaced from each other by the same measurement, wherein between each pair of rods, a gripper (28) supporting a brake pad (32) can be removably inserted, by means of the robotic arm (26), said flat plate (106) being horizontally slidable within horizontal guides (110) of a length established by a support block (111), and said flat plate (106) being joined to the end of a pneumatic cylinder (112') housed between the horizontal guides (110), which act as a slide and is fixed below on an upper plane (113) of a horizontal support base (114), which in turn is fixed on a flat plate (115) applied to said metal plate (10), said flat plate (106) being movable by the pneumatic cylinder (112') from a first to a second end-stroke position, and vice versa.

9. Machine according to claim 8, **characterised by** a vertical metal frame (98) of rectangular shape, formed by a horizontal upper profile (99), joined with its ends with the corresponding ends of a relative vertical elongated profile (100 and 101), whose other ends are joined with the corresponding ends of a lower metal support structure (102) fixed with the underlying lower metal plate (10), said vertical profiles (100 and 101) being stiffened in position by at least one additional central horizontal profile (103) and spaced apart from each other, in order to allow the alternating vertical sliding of a thin vertical sliding frame (104), which is joined above with a stem (105) of a pneumatic cylinder (90) wherein between the lower ends of said vertical profiles (100 and 101), said flat horizontal plate (106) is sliding in an alternating horizontal direction, said sliding frame (104) being movable from a lower lowered position, to an upper raised position, and vice versa, wherein in the lowered position of said sliding frame (104), said movable plate (106) moved into a position between said vertical profiles (100 and 101) cannot move and slide in a horizontal direction, in the condition in which said rod (105) is removed from the cylinder (90), and instead in the upper raised position of said sliding frame (104), such a movable plate (106) is removed from the vertical profiles (100 and 101) thus allowing the flat plate itself to slide horizontally.
